**Europäisches Patentamt**

**European Patent Office**

**Office européen des brevets**

(19)

(11) **EP 1 195 971 A2**

(12) ## EUROPEAN PATENT APPLICATION

(43) Date of publication:
**10.04.2002 Bulletin 2002/15**

(51) Int Cl.[7]: **H04M 1/22**, H04M 1/73

(21) Application number: **01122669.3**

(22) Date of filing: **28.09.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **03.10.2000 JP 2000303497**

(71) Applicant: **Pioneer Corporation**
**Meguro-ku, Tokyo (JP)**

(72) Inventors:
• **Furuya, Kensei,**
  **Pioneer Corporation Kawagoe Works**
  **Kawagoe-shi, Saitama (JP)**

• **Yamanushi, Seiji**
  **Pioneer Corporation Kawagoe Works**
  **Kawagoe-shi, Saitama (JP)**
• **Yoshida, Masao,**
  **Pioneer Corporation Kawagoe Works**
  **Kawagoe-shi, Saitama (JP)**

(74) Representative:
**Klingseisen, Franz, Dipl.-Ing. et al**
**Patentanwälte,**
**Dr. F. Zumstein,**
**Dipl.-Ing. F. Klingseisen,**
**Postfach 10 15 61**
**80089 München (DE)**

(54) **Portable information terminal apparatus having illumination control function**

(57)    A portable information terminal apparatus measures the ambient illuminance and exercises illumination control over its display and manual input unit during a predetermined period. The appropriate length of this predetermined period is determined from various parameters including the ambient illuminance and the function(s) to be used by the portable information terminal apparatus. Illuminance measurements are subjected to various corrective computations to obtain proper illuminance decision values. These decision values are used to perform appropriate illumination control,

FIG.1

EP 1 195 971 A2

**Description**

BACKGROUND OF THE INVENTION

Field of the Invention

The present invention relates to a portable information terminal apparatus (hereinafter, referred to simply as portable terminal) which measures an ambient illuminance to control the illumination intensity for the display unit and manual input unit of the apparatus.

Description of the Related Art

Portable terminals, typified by cellular phones and pagers, are desirably easy to use at night and in dark places. For that reason, portable terminals have, in their cabinets, LEDs or other light-emitting devices for illuminating the display units, which are composed of display devices such as a liquid crystal display (LCD), and the manual input units, which are composed of numeric keys and various function keys.

These light-emitting devices are, however, typically high in power consumption. For battery-powered portable terminals to extend their operating time on a single charge, the illuminating time must therefore be reduced as much as possible.

In response to such a demand, there has been disclosed as conventional art a portable terminal which measures its surroundings for illuminance and, only if the surroundings are dark, lights up illumination-intended light-emitting devices to illuminate its display unit and manual input unit (Japanese Patent Laid-Open Publication No.Hei 7-131511.)

This terminal initially measures the ambient illuminance upon receiving a call or at the start of operations. If the surroundings are dark, the display unit and the manual input unit are subsequently irradiated with illumination light only for a predetermined time. Accordingly, once the illumination light is lit up or put out after the start of use of the terminal, then it is impossible to correspond to subsequent changes in the brightness around the terminal. Additionally, when a time-consuming function such as mail transmission and reception is in use, the illumination light might go out during the use of that function, resulting in poor usability.

OBJECTS AND SUMMARY OF THE INVENTION

The present invention has been developed to eliminate the foregoing defects. It is thus an object of the present invention to provide a portable terminal which measures the ambient illuminance, and controls illumination the associated display unit and manual input unit, when making any display or accepting any operation.

A portable information terminal apparatus according to the present invention includes a display unit, a manual input unit, a transmitting and receiving unit controlling communication signal transmission and reception, an illuminance detecting unit for detecting the illuminance around the apparatus, an illuminating unit for irradiating at least either of the display unit and the manual input unit with illumination light, and an illumination control unit controlling luminous intensity control over the illuminating unit based on an ambient illuminance detected by the illuminance detecting unit.

Here, the luminous intensity control of the illumination control unit is effected by a luminous intensity determination process for determining the luminous intensity of the illuminating unit based on the ambient illuminance, and a luminous intensity changing process for changing the luminous intensity of the illuminating unit based on the luminous intensity determined in the luminous intensity determination process. The illumination control unit performs the luminous intensity control a plurality of times within a predetermined period based on information from at least either of the manual input unit and the transmitting and receiving unit.

**BRIEF EXPLANATION OF THE DRAWINGS**

Fig. 1 is a block diagram showing the configuration of a cellular phone terminal apparatus which is an embodiment of the present invention;
Figs. 2A and 2B are time charts showing the relationship between the occurrence of events and the illuminance measurement process etc. in the apparatus of Fig. 1;
Fig. 3 is a time chart showing the basic operations of the illuminance measurement and the backlight illumination control process in the apparatus of Fig. 1;
Fig. 4 is a flowchart showing a control subroutine for the illuminance measurement and the like in the apparatus of Fig. 1;
Fig. 5 is a time chart showing how illuminance decision values are calculated, and the illumination control process is exercised in the computing mode 1 in the apparatus of Fig. 1;
Fig. 6 is a time chart showing how illuminance decision values are calculated, and the illumination control process is exercised in the computing mode 2 in the apparatus of Fig. 1;
Figs. 7A and 7B are time charts for situations where a threshold is given hysteresis properties during the illumination control process in the apparatus of Fig. 1; and
Figs. 8A and 8B are time charts for situations where the illuminance decision values are given hysteresis properties during the illumination control process in the apparatus of Fig. 1.

## DETAILED DESCRIPTION OF THE PREFERRED EMBODIMENT

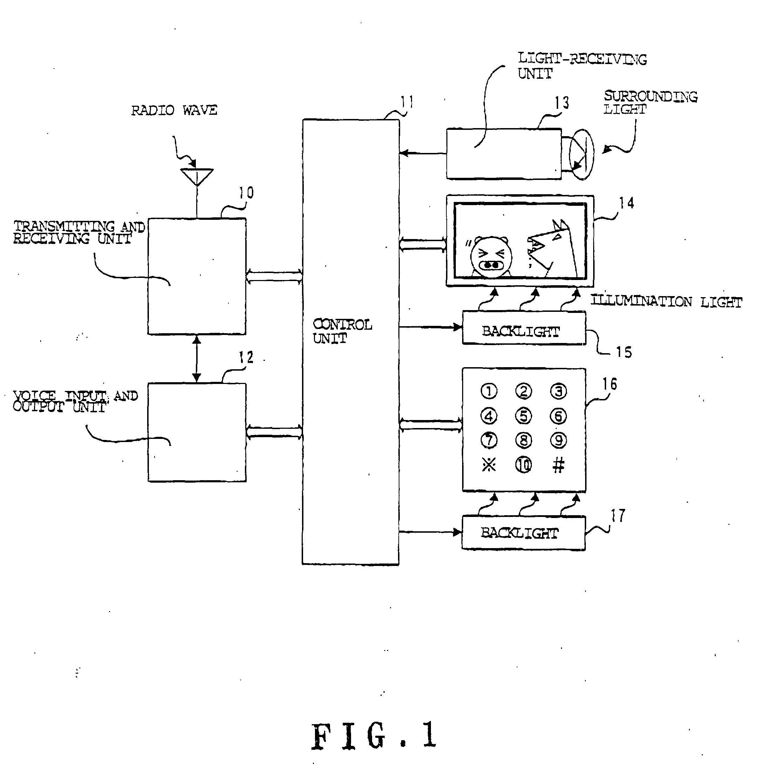

Fig. 1 is a block diagram showing the configuration of a cellular phone terminal according to the present invention.

In Fig. 1, a transmitting and receiving unit 10 is a circuit for performing signal transmission and reception . More specifically, the transmitting and receiving unit 10 applies processing such *as* error correction coding and interleaving to the signals to be transmitted from the cellular phone terminal. Then, the transmitting and receiving unit 10 applies modulation to the transmission signals before sending the transmission radio waves to a base station by using a built-in RF circuit. The transmitting and receiving unit 10 also uses the built-in RF circuit to detect and demodulate reception radio waves from a base station. Subsequently, the transmitting and receiving unit 10 applies processing such as error correction and deinterleaving to the signals modulated, and supplies the resultant to a control unit 11.

The control unit 11 is mainly comprised of a microcomputer (hereinafter, referred to simply as μCPU) to control the operation of the entire cellular phone terminal. The control unit 11 also includes memories such as a read only memory (ROM) and a random access memory (RAM). The ROM contains various programs for controlling the operation of the cellular phone terminal. The μCPU of the control unit 11 executes these programs step by step in accordance with an internal clock. It follows that a variety of functions of the cellular phone terminal are performed. Moreover, the RAM temporarily contains various measurements, calculations, processing results, and the like obtained in the course of operation processes.

A voice input/output unit 12 is a circuit for governing conversion of the voice input from a microphone and the voice output to a small-sized speaker or earphone to/from electric signals. In general, these electric signals are digitized by a voice codec circuit which is incorporated into the voice input/output unit 12. Then, these electric signals are communicated to/from the control unit 11 in the form of digital data. Note that this part is omitted if the portable terminal does not require voice input and output, e.g., a pager or a POS terminal.

A light-receiving unit 13 is a circuit for detecting external light around the cellular phone terminal by using a photoreceptor device such as a phototransistor and a photodiode, and converting the detected light into an electric signal. The light-receiving unit 13 further digitizes this signal, or illuminance signal, and supplies the resultant to the control unit 11.

A display unit 14 is a display device composed of, for example, a liquid crystal display (LCD). The display unit 14 displays reception data arriving at the cellular phone terminal, operational procedures of the cellular phone terminal, and the like. A manual input unit 16 is composed of numeric keys and function keys which are made of plastic, soft-resin, or other light transparent members. The manual input unit 16 is used to enter various operation commands and transmission data to the cellular phone terminal.

Backlights 15 and 17 are light-emitting devices, such as LEDs, for illuminating the display unit 14 and the manual input unit 16, respectively. The cellular phone terminal according to the present invention is not limited to the configuration shown embodiment. For example, the display may be composed of organic electroluminescence(EL) or other self-luminous members. The manual input unit may be a touch panel. In the case of such configuration, the display unit 14, the manual input unit 16, and the backlights 15 and 17 should be unitized in different groupings depending on the actual design specifications.

When there is an incoming call from the base station or any key operation from the manual input unit 16, i.e. when a so-called event (hereinafter, referred to simply as event) occurs, various parts of the cellular phone terminal, such as the transmitting and receiving unit 10 and the manual input unit 16, generate an interrupt signal to the μCPU of the control unit 11. This interrupt signal activates a subroutine for illuminance measurement, illumination control, and the like (hereinafter, referred to simply as control subroutine).

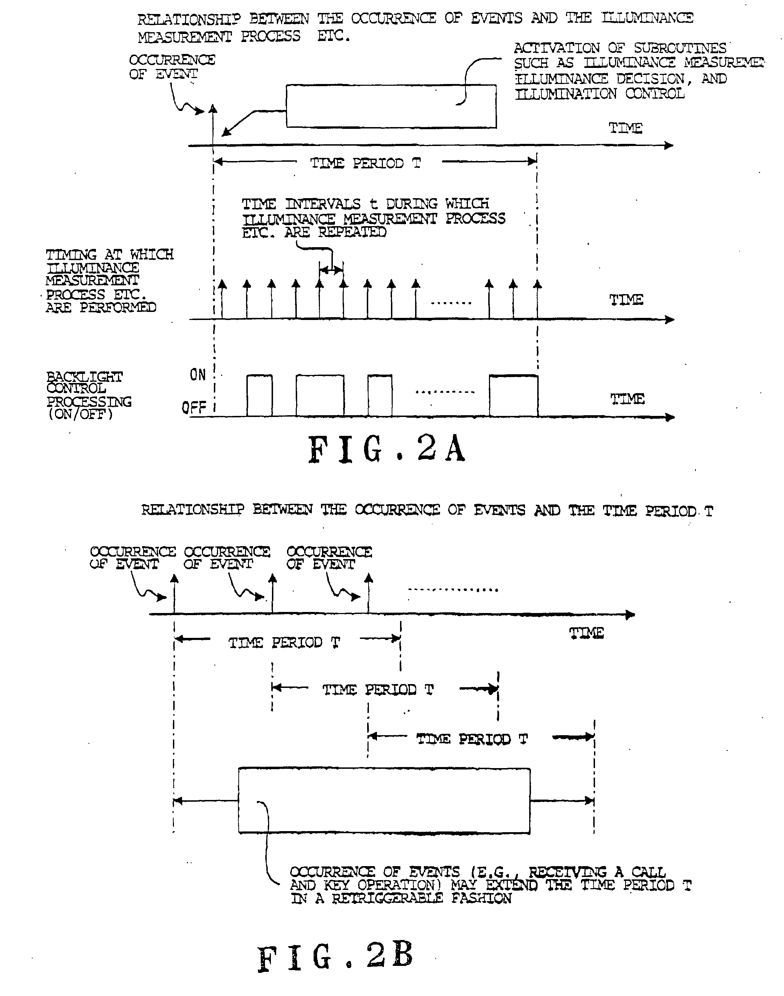

In response to the activation of the control subroutine, the control unit 11 measures the illuminance around the cellular phone terminal, and calculates from the measurement: an illuminance decision value for use in illumination control. Then, the control unit 11 performs illumination control of the backlights 15 and 17 on the basis of the decision value. The control unit 11 repeats the series of processes over a predetermined time period T at regular time intervals t. This is depicted in a time chart of Fig. 2(a). Note that the control subroutine is activated each time an event occurs. Therefore, consecutive occurrence of events can extend the time period T in a retriggerable fashion as shown in a time chart of Fig. 2(b).

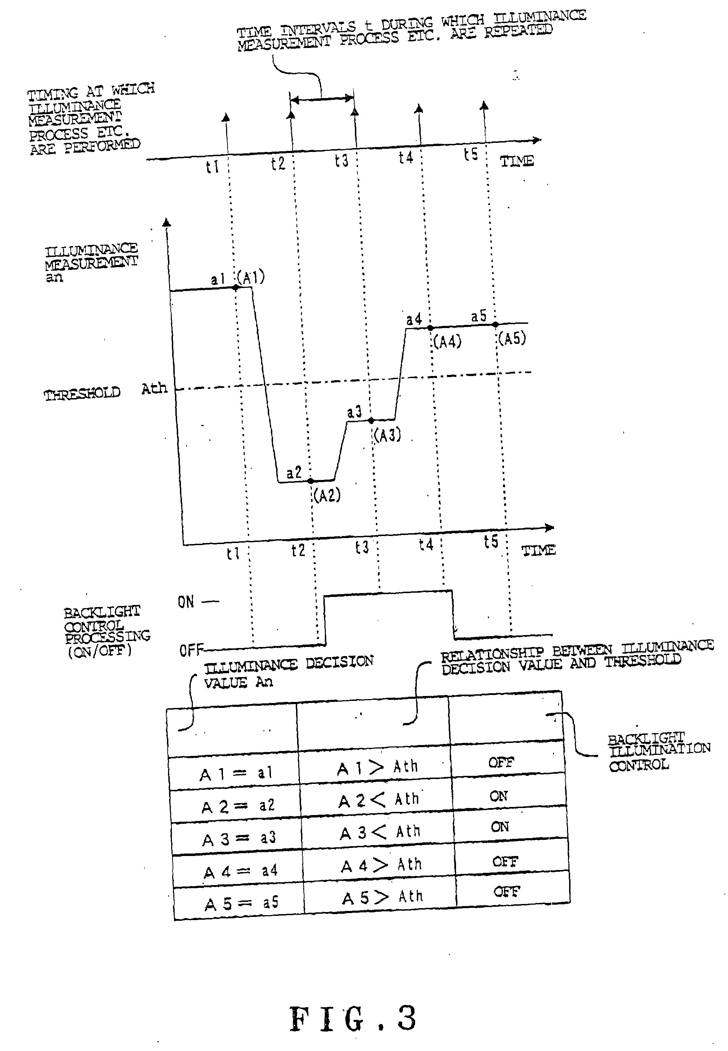

Next, the basic operations of the illuminance measurement and the backlight illumination control according to the present invention will be described with reference to a time chart of Fig. 3.

When the control subroutine is activated by the occurrence of an event, the control unit 11 repeatedly measures the illuminance around the cellular phone terminal at time intervals t by using the photoreceptor device of the light-receiving unit 13.

Suppose that an illuminance measurement at a time $t(n)$ is $a(n)$, from which the control unit 11 determines an illuminance decision value $A(n)$ at the time $t(n)$. Here, the illuminance decision value refers to a value in performing illumination control for lighting up or shutting off the backlights 15 and 17. To be more specific, when the illuminance decision value $A(n)$ exceeds a predetermined threshold Ath, the control unit 11 determines that the surroundings of the cellular phone terminal are bright, and shuts off the backlights. On the other hand, when A(n) falls to or below the threshold Ath, the control unit 11 decides that the surroundings are dark, and lights up the backlights.

The time chart shown in Fig. 3 is for the purpose of describing the basic operations of the illuminance measurement and the illumination control according to the present invention. For this reason, the illuminance decision values are obtained from the illuminance measurements without any computation. It follows that the illuminance measurements a(n) and the illuminance decision values A(n) maintain the relationship a(n)= A(n).

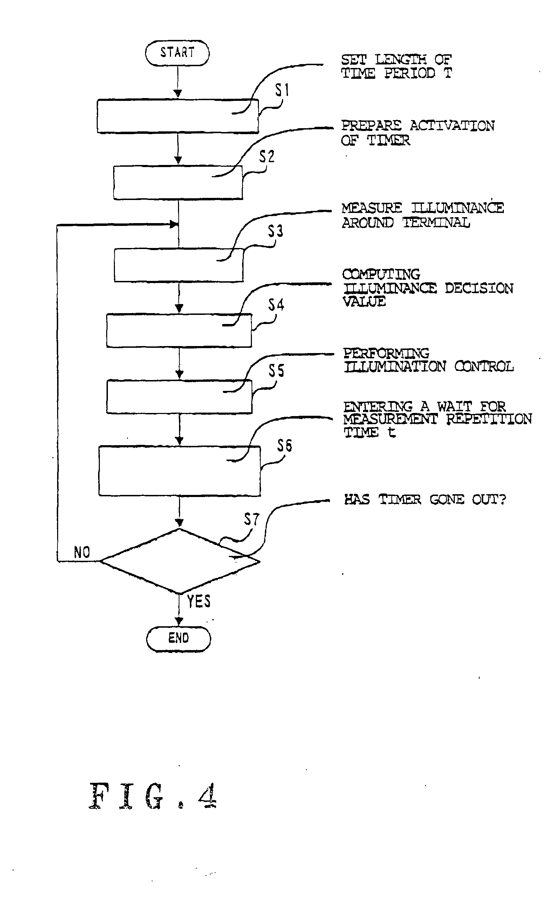

Now, the operations of the control subroutine will be described in detail with reference to a flowchart of Fig. 4. It should be noted that this subroutine, as stated before, is activated in a retriggerable fashion each time an event occurs in the cellular phone terminal.

At Step 1 of this subroutine, the control unit 11 sets the length of the time period T over which the illuminance measurement and illumination control processing is performed. In the present embodiment, the length of the time period T is set by using the following four methods.

In a first method, the control unit 11 sets the length of the time period T based on the illuminance signal supplied from the light-receiving unit 13. In this case, the control unit 11 recognizes the ambient brightness in steps such as "dark" and "dim". If "dim", the illumination of the display and the manual input unit is considered as auxiliary. Then, the length of the time period T for performing the illuminance measurement and illumination control processing is set shorter than in the case of "dark". For the control unit 11 to recognize that the ambient illuminance is "dark" or "dim", for example, there may be provided a plurality of thresholds Ath upon which the ambient illuminance is determined so as to perform ON/OFF control of the illumination.

This makes it possible, in "dark" surroundings, to secure a practical sufficient time for the backlights to be lit even in situations where key operations and other events seldom occur. In "dim" surroundings, the illuminance measurement and illumination control processing can be terminated in a shorter time to avoid a waste of battery power.

As for a second method, the control unit 11 recognizes the display information on the display unit 14, and sets the time period T based on the contents of the display information. For example, the time period T is set longer if the display information is e-mail, animation image distribution service, or the like in which case the display screen is viewed at length without key operations or events. In contrast, the time period T is set shorter if the amount of display information is less and leads to immediate key operations, such as a function or operation guide. This eliminates disadvantages such as the backlights going out while the display screen is activated, and the backlights unnecessarily kept on even after the completion of function-setting key operation.

In a third method, the control unit 11 sets the time period T depending on the function commanded from the manual input unit 16. For example, functions for entering a large amount of text data or setting numbers of use conditions, such as an e-mail function and a phone directory function, require a long time for execution. Therefore, the time period T is set longer for such oprations. In contrast, functions for simply checking the ringer level and the ringer melody end in a short time. Therefore, the time period T is set shorter in such cases.

Furthermore, in a fourth method, the control unit 11 sets the time period T based on the type of signals the transmitting and receiving unit 10 is handling. More specifically, voice signals indicate that the cellular phone terminal is used merely as a telephone set, which means little necessity to illuminate the display unit and the manual input unit. Then, the time period T is set shorter than in data signal handling.

Based on the parameters mentioned in the four methods above, the time period T for the illuminance measurement and illumination control processing can be changed in duration. These features can improve the cellular phone terminal in viewability, operability, and power-conservation characteristics.

It should be noted that these parameters need not be necessarily used separately in setting the time period T. Various ones of the parameters may be combined as appropriate to set the length of the time period T.

Moreover, two different time periods T1 and T2 may be established to take charge of the illumination controls over the backlight 15 which illuminates the display unit 14, and over the backlight 17 which illuminates the manual input unit 16, respectively.

The reason for this is as follows. The manual input unit has only to be illuminated during the input operation via the operating keys. Therefore, the time period T2 may be shorter. The display unit, in contrast, must have the display screen illuminated throughout data communications such as e-mail, and thus a longer time period T1 is preferred.

At the next Step 2, the control unit 11 sets a built-in timer to the time period T determined at Step 1, and starts the timer. The timer subsequently counts down in accordance with a clock signal that is built in the control unit 11.

If Step 1 establishes different time periods T1 and T2 for the display unit and the manual input unit, respectively, then two timers are prepared at Step 2. The timers are set at time lengths of T1 and T2, respectively. That is, the timers individually count down, and are individually checked for expiration.

At the next Step 3, the control unit 11 measures the illuminance around the terminal by using the light-receiving unit 13. At Step 4, the control unit 11 determines an illuminance decision value A(n) from the formulae in a computing mode 1 or a computing mode 2 to be described later. Then, at Step 5, the control unit 11 compares the illuminance decision value A(n) and a predetermined threshold Ath to exercise illumination control over the backlights 15 and 17.

As shown in the time charts of Figs. 2(a) through 3, this series of processes ranging from the illuminance measurement to the illumination control is performed at every predetermined time interval t over the time period T. The process of this repetitive processing is shown by Step 6 and Step 7 in the flowchart of Fig. 4.

More specifically, the control unit 11, upon the completion of the series of illuminance measurement and illumination control processing which ranges from Step 3 to Step 5, enters a wait for a measurement repetition time t at Step 6. This corresponds to a so-called time wait in software. That is, during the time t, the control unit 11 returns the processing from the control subroutine of Fig. 4 to a main routine. The control unit 11 then executes processes of the main routine or those of other subroutines. Subsequently, after the elapse of the time t, the control unit 11 moves the processing back to the control subroutine of Fig. 4. The control unit 11 then starts the subroutine from the Step 7.

At Step 7, the control unit 11 determines whether or not the timer of the time period T started at Step 2 has lapsed. If the time period T has not yet elapsed, the control unit 11 returns to Step 3 to re-execute the series of processes described above. On the other hand, if the time period T has elapsed, the control unit 11 terminates this subroutine.

By the control unit 11 executing the foregoing processes, the illuminance measurement and illumination control processing is repeated at time intervals t over the time period T. Here, illuminance measurements a(n) at respective measurement times t(n) are successively obtained as a time series at time intervals of t. Among the illuminance measurements a(n) included in this time series, as many data pieces as required for the computing process of calculating the illuminance decision value A(n) are stored in the memory of the control unit 11.

Now, description will be given of the computing modes for determining the illuminance decision value A(n) at Step 4.

Two computing modes, mode 1 and mode 2, are used. These modes may be freely switched by the user from function keys or the like on the manual input unit 16. The cellular phone terminal may be fixed to a predetermined mode by the vendor before shipment.

Initially, description will be given of the computing mode 1. The computing mode 1 utilizes two pieces of data, an illuminance measurement a(n-1) at a previous time t(n-1) and an illuminance measurement a(n) at the current time t(n), out of the time series data stored in the memory of the control unit 11 at time intervals t. Such a(n-1) and a(n) are averaged into an illuminance decision value A(n) at the time t(n). That is, the illuminance decision value A(n) at the time t(n) is determined by the following calculation:

$$A(n) = \{a(n-1) + a(n)\} / 2$$

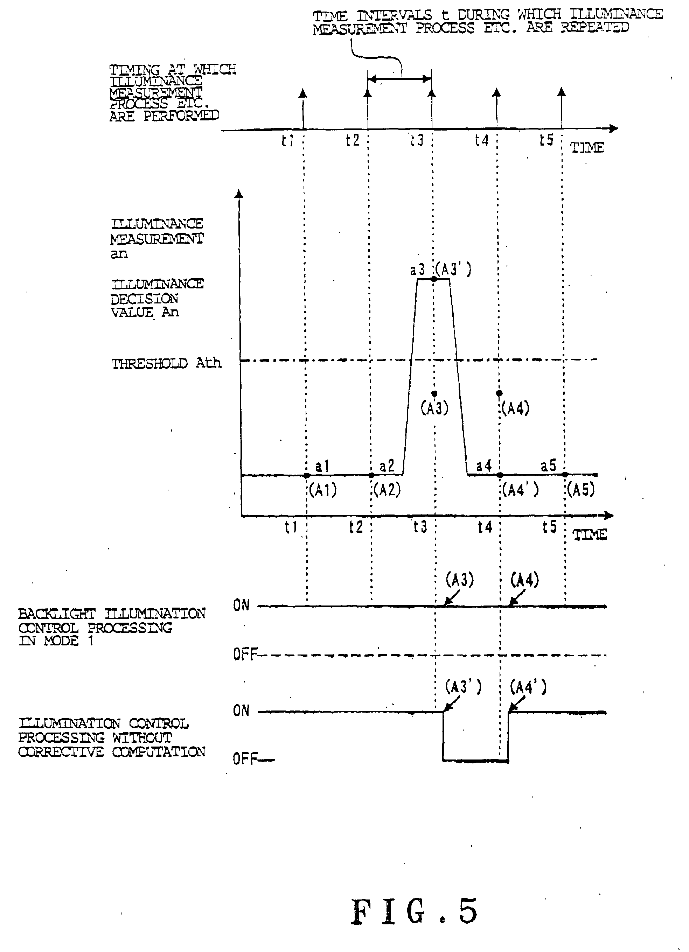

Calculation examples of the illuminance decision value in the computing mode 1 are shown in a time chart of Fig. 5. In the chart, A(n)' show values for situations where the illuminance decision values are obtained directly from the illuminance measurements a(n) at the times t(n) without the mode-1 computation, or as a(n)= A(n)'.

In Fig. 5, the illuminance measurements a1 and a2 at times t1 and t2 have low, nearly-constant values. Thus, the illuminance decision values A1 and A2 at the respective times fall to constant values near the illuminance measurements a1 and a2. This value is smaller than the threshold Ath. As a result, the control unit 11 determines that the cellular phone terminal is in dark surroundings, and maintains the backlights lit up.

At a time t3, suppose, for example, that the surroundings of the cellular phone terminal are temporarily illuminated by a car headlight, or that the user holding the cellular phone terminal passes under a street lamp. This instantaneously increases the illuminance measurement around the cellular phone terminal to a3. Here, if the illuminance measurement a3 is used intact as an illuminance decision value A3', the illuminance decision value exceeds the threshold Ath to shut off the backlights.

However, under the mode-1 computation, an illuminance decision value A3 is determined as an average between the previous illuminance measurement a2 and the current illuminance measurement a3. As a result, the illuminance decision value A3 falls below the threshold Ath, keeping the backlights lit up.

That is, the execution of the mode-1 computation can determine illuminance decision values while smoothing down instantaneous variations in the ambient illuminance of the cellular phone terminal. Accordingly, even in an environment where the ambient illuminance varies frequently, the mode-1 computation can prevent unnecessary backlight flickering.

Next, description will be given of the case where the control unit 11, at Step 4, performs computations in the computing mode 2 as corrective computations in calculating illuminance decision values.

The computing mode 2 uses two values, or an illuminance decision value A(n-1) obtained at a previous time t(n-1) and an illuminance measurement a(n) at the current time t(n). These two values are given appropriate weights, respectively, before averaged into the current illuminance decision value A(n).

In other words, in the computing mode 2, the backlights are subjected to illumination control at a time t(n-1) on the basis of the illuminance decision value A(n-1) determined at that time. Thereafter, this value is once stored in the memory in the control unit 11. Then, at the next processing time t(n), the current illuminance decision value A(n) is determined from the value A(n-1) stored in the memory and the current illuminance measurement a(n), under the following equation:

$$A(n) = \{\alpha \times A(n-1) + \beta \times a(n)\} / (\alpha + \beta)$$

The control unit 11 performs the illumination control at the time t(n) by using this illuminance decision value A(n). Then, the value A(n) is stored in the memory of the control unit 11 in preparation for the computation of an illuminance decision value at the next time t(n+1).

In the foregoing equation, $\alpha$ and $\beta$ are factors to assign appropriate weights to the previous illuminance decision value A(n-1) and the current illuminance measurement a(n), respectively. The values of these factors should be determined with consideration given to various conditions including the operating characteristics and the use environment of the cellular phone terminal.

For example, the vendor of the cellular phone terminal apparatus may determine optimum values for $\alpha$ and $\beta$ from the results of track-record research including use environment research and market research on cellular phone terminals, and set the values in built-in software of the cellular phone terminal. Moreover, these factors may be configured to allow arbitrary setting by the user of the cellular phone terminal. For example, a function of "flicker prevention" may be selectably provided by appropriate key operations to the cellular phone terminal. Then, operation software is configured so that, under the function, $\alpha$ and $\beta$ change by predetermined ratios in value each time a predetermined function key is depressed.

Substitution of $\alpha$ = 1 and $\beta$ = 1 into the foregoing equation yields:

$$A(n) = \{A(n-1) + a(n)\} / 2$$

Here, the illuminance decision value A(n) turns out to be an arithmetic average of the previous illuminance decision value A(n-1) and the current illuminance measurement a(n).

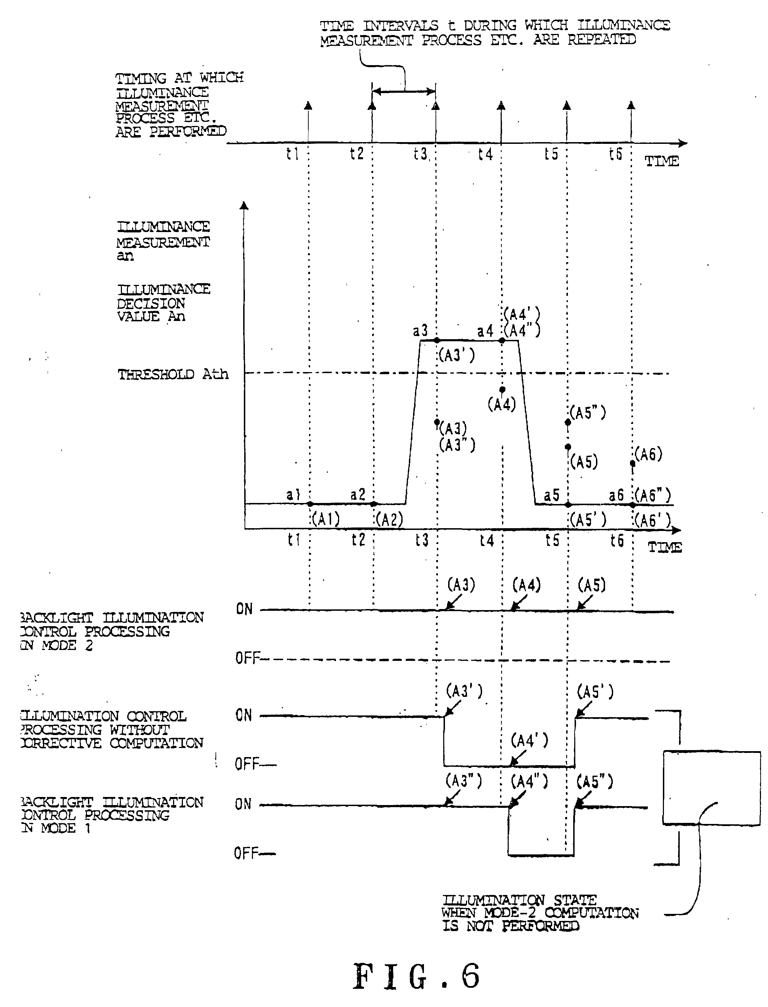

Now, calculation examples of the illuminance decision value in the computing mode 2 will be described in conjunction with a time chart of Fig. 6.

In the chart, A(n)' show values for situations where the illuminance measurements a(n) at the times t(n) are used intact for the illuminance decision values at the same times, or as a(n)= A(n)', Meanwhile, A(n)" show values for situations where the illuminance decision values at the times t(n) are determined through the mode-1 computation, Incidentally, the chart includes these values A(n)' and A(n)" for the convenience of comparisons with the calculations A(n) in the computing mode 2. For the ease of description of the mode-2 operation, the time chart of Fig, 6 also assumes an arithmetic-average situation with the above-described weight factors of $\alpha$ =1 and $\beta$ = 1.

In the chart, at times t1 and t2, the surroundings of the terminal are dark and the illuminance measurements are approximately constant. Then, the illuminance decision values A1 and A2 calculated in the mode 2 fall within the vicinity of the illuminance measurements a1 and a2, and below the threshold Ath. Therefore, the terminal keeps the backlights 15 and 17 lit up.

At a time t3, the measurement of the ambient illuminance increases abruptly to a3 for some reason. In the present computing mode, the previous illuminance decision value, i.e. A2, and the current illuminance measurement a3 are averaged as an illuminance decision value A3 at the time t3. Therefore, the illuminance decision value A3 doesn't exceed the threshold Ath. As a result, the backlights 15 and 17 are kept lit up even after the time t3.

At the next time t4, the illuminance around the cellular phone terminal remains high, and the illuminance measurement a4 still maintains a higher value. Thus, the illuminance decision value A4" determined by the mode-1 computation, not to mention the illuminance decision value A4' which is the illuminance measurement a4 used intact as an illuminance decision value, exceeds the threshold Ath. In other words, the backlights should go out in these cases.

In the mode 2, however, the previous illuminance decision value A3, or the average between the previous illuminance measurement value and the illuminance decision value immediately prior to the illuminance measurement value, and the current illuminance measurement a4 are averaged as an illuminance decision value A4 of the current time t4. Therefore, the illuminance decision value A4 at the time t4 is also prevented from exceeding the threshold Ath. As a result, in the present mode, the backlights are kept from going out even after the time t4.

Now, the illuminance measurement a5 and a6 at the subsequent times t5 and t6 drop to previous values, and the illuminance decision values A5 and A6 in the present mode decrease gently as shown in Fig. 6.

That is to say, executing the computations in the mode 2 allows yet smoother changes of the illuminance decision value with respect to illuminance measurement variations than in the mode 1. Accordingly, even in such an environment that the illuminance varies with relatively greater time widths, the mode-2 computation can be performed to prevent backlight flickering.

Next, description will be given in detail of the illumination control process at Step 5 in the flowchart of Fig. 4.

At Step 5, the control unit 11 compares the illuminance decision value A(n) obtained at Step 4 with the predetermined threshold Ath. If A(n) is greater than the threshold Ath, the control unit 11 shuts off the backlights. If A(n) is smaller than or equal to the threshold Ath, the control unit 11 lights up the backlights.

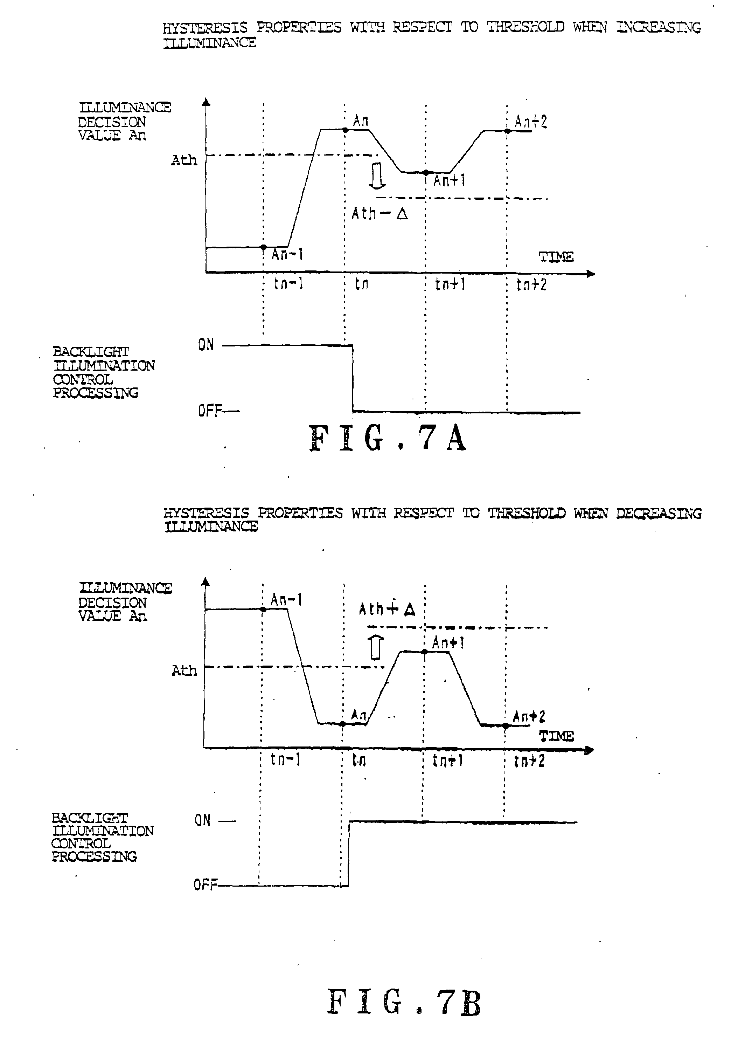

In the present embodiment, such backlight light-up/shut-off processing is accompanied with hysteresis processing as shown in Figs. 7A and 7B.

To be more specific, suppose that the ambient illuminance successively increases so that the illuminance decision value A(n) at a time t(n) exceeds the threshold Ath as shown in Fig. 7A. Here, the control unit 11 lowers the threshold to be used in the illuminance decision to (Ath - ΔA), after the subsequent time t(n+1). When the ambient illuminance is on the increase, there sometimes occurs a so-called phenomenon hunting in which the illuminance decision value oscillates about the previous threshold Ath. Even so, the adoption of such measures reduces the possibility that the illuminance decision value might drop below the new threshold (Ath - ΔA). This can avoid the backlights blinking.

Now, suppose that the ambient illuminance decreases as shown in Fig. 7B so that the illuminance decision value A(n) at a time t(n) falls below the threshold Ath. Here, the control unit 11 raises the threshold to be used in the illuminance decision to (Ath + ΔA), after the subsequent time t(n+1). Such measures reduce the possibility that the illuminance decision value exceeds the new threshold (Ath + ΔA), even if hunting follows the drop in the ambient illuminance.

That is, in the present embodiment, the threshold is lowered to facilitate the maintenance of lighting once the backlights are lit up. In contrast, once the backlights are shut off, the threshold is raised to facilitate the maintenance of the shut-off state. As a result, the backlights are kept from flickering.

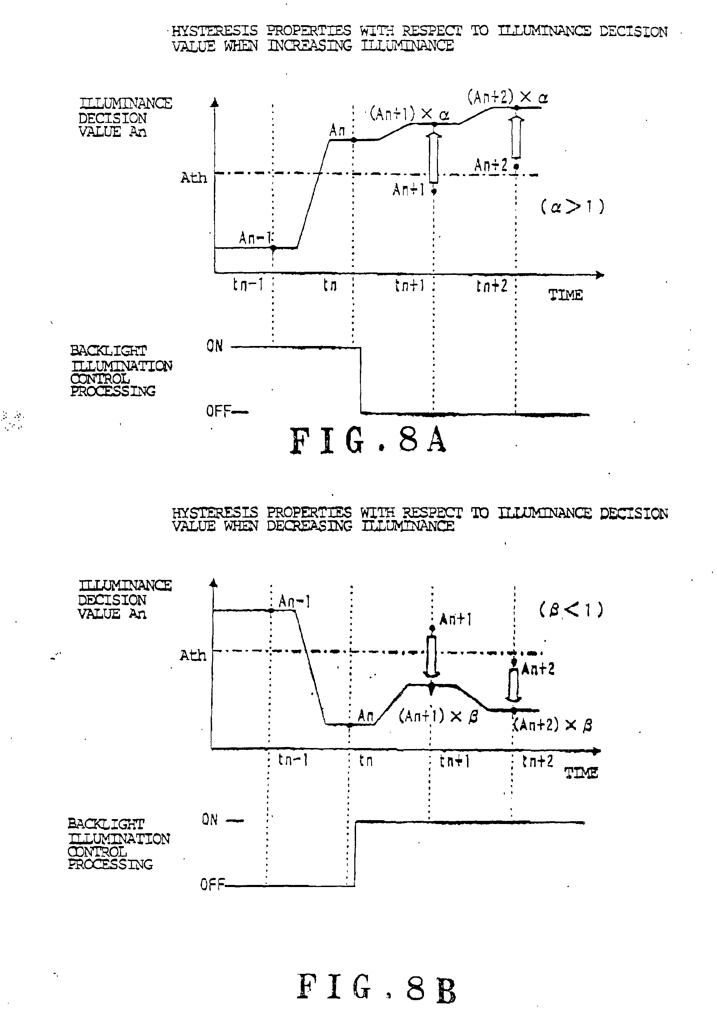

Note that the hysteresis settings for the comparative decision of the illuminance decision value and the threshold are not limited to the ones described above. For example, the threshold Ath may be kept constant in value while illuminance decision values A(n), when on the increase, are multiplied by a factor α (α > 1) as shown in Fig. 8A after the threshold is exceeded. Then, the seemingly-increased illuminance decision values are compared with the threshold Ath. Similarly, as shown in Fig. 8B, multiplications of a factor β (β < 1) may be performed for correction when the illuminance is on the decrease. Then, the seemingly-decreased illuminance decision values are compared with the threshold Ath.

In the present embodiment, the illuminance decision values can be hysteresis properties to prevent the flickering of the backlights in the illumination control process.

The illumination control process of Step 5 has been described on the assumption that only a single threshold Ath is established for the sake of comparisons with the illuminance decision values A(n). However, this value is not limited to a single threshold value. For example, a plurality of thresholds may be provided in steps of illuminances. Such measures allow not only the on-and-off two-behavior control of the backlights but also stepwise illumination control corresponding to the ambient brightness.

Moreover, instead of discrete values, the threshold Ath may be defined as a given function Y = Ath(X) for determining the relationship between an illuminance decision value X and the luminous intensity Y of the backlights. The adoption of such a function form allows continuous variable control over the luminous intensity of the backlights in accordance with variations in the illuminance decision value X.

These measures can be taken to exercise yet finer illumination control over the display unit and the manual input unit of the cellular phone terminal. Power saving also becomes possible for the cellular phone terminal.

Furthermore, the backlight 15 for illuminating the display unit 14 and the backlight 17 for illuminating the manual input unit 16 may be provided with thresholds of different values, respectively. The reason for this is that the display unit and the manual input unit of a cellular phone terminal have different relationships between their viewability and ambient illuminance.

More specifically, in the case of the display unit, small characters must be visually recognized during data communications such as e-mails. Therefore, when the ambient illuminance starts to decrease, illumination is required at a relatively brighter stage. On the contrary, the manual input unit has numeric keys and other operating keys in fixed positions, so that the positions of the operating keys can be recognized even in somewhat darker surroundings, Thus, the illumination may be postponed with no practical problem until the ambient illuminance drops considerably.

Accordingly, two different thresholds Ath1 and Ath2 may be provided for illumination controls over the backlight 15 for illuminating the display unit 14 and the backlight 17 for illuminating the manual input unit 16, respectively (where Ath1 > Ath2).

These measures can be taken to secure sufficient viewabilities for the display unit and the manual input unit of the cellular phone terminal, respectively, and achieve further overall power savings for the cellular phone terminal.

The present invention is not limited to a cellular phone terminal, and may be applied to other portable terminals such as a pager, a POS terminal, and a home appliance's remote controller.

As has been detailed, according to the present invention, the on/off controls over the illumination of a display and the like can be exercised in response to the ambient brightness and/or the state of the apparatus. Consequently, it is possible to provide a portable information terminal apparatus with an illumination control function and which has excellent viewability. operability, and power-conservation effects.

It is understood that the foregoing description and accompanying drawings set forth the preferred embodiment of the invention at the present time. Various modifications, additions and alternative designs will, of course, become apparent to those skilled in the art in light of the foregoing teachings without departing from the spirit and scope of the disclosed invention. Thus, it should be appreciated that the invention is not limited to the disclosed embodiment but may be practiced within the full scope of the appended claims.

**Claims**

1. A portable information terminal apparatus comprising a display part; a manual input part; a transmitting and receiving part for executing communication signal transmission and reception; an illuminance detecting part for detecting an ambient illuminance level around the apparatus; an illuminating part for illuminating at least either of said display part and said manual input part by an illumination light; and an illumination control part for executing a luminous intensity control of said illumination light based on said ambient illuminance level detected by said illuminance detecting part, wherein said illumination control part performs said luminous intensity control by executing a plurality of cycles within a predetermined adjust period, each cycle including:

   a luminous intensity determination process for determining a current luminous intensity of said illumination light, based on the detected ambient illuminance level; and
   a luminous intensity adjusting process for adjusting said current luminous intensity of said illumination light, based on the luminous intensity determined in said luminous intensity determination process.

2. The portable information terminal apparatus according to claim 1, in which the number of cycles within said predetermined adjust period and a length of said predetermined adjust period are determined based on information from at least either of said manual input part and said transmitting and receiving part.

3. The portable information terminal apparatus according to claim 1, wherein said luminous intensity determination process determines the luminous intensity of said illumination light in the current cycle, based on an average between the ambient illuminance level in the previous cycle and the ambient illuminance level in the current cycle.

4. The portable information terminal apparatus according to claim 1, wherein said luminous intensity determination process determines the luminous intensity of said illumination light in the current cycle, based on an average between the average of ambient illuminance levels of the previous cycles and the ambient illuminance level in the current cycle.

5. The portable information terminal apparatus according to claim 1, wherein said luminous intensity determination process generates an illuminance decision value based on said ambient illuminance level, and compares said illuminance decision value and a predetermined threshold, to determine the luminous intensity of said illumination light, at least either of said illuminance decision value and said predetermined threshold being given a hysteresis property upon said comparison.

6. The portable information terminal apparatus according to claim 1, wherein said illumination control part adjusts the length of said predetermined adjust period in accordance with at least one of said ambient illuminance level detected by said illuminance detecting part, the contents of display information to be displayed on said display part, a function commanded from said manual input part, and a type of signal to be handled by said transmitting and receiving part.

7. The portable information terminal apparatus according to claim 5, wherein:

   said luminous intensity determination process provides two or more different values for said predetermined threshold, and determines the luminous intensity of said illumination light in a multilevel fashion; and
   said luminous intensity adjusting process adjusts the luminous intensity of said illumination light in a multilevel fashion based on the multilevel luminous intensity determined.

8. The portable information terminal apparatus according to claim 6, wherein said illumination control part sets the length of said predetermined adjust period to different values, in performing said luminous intensity control for said display part and in performing said luminous intensity control for said manual input part, respectively.

9. A portable information terminal apparatus comprising a display part; a manual input part; an illuminance detecting part for detecting an ambient illuminance level around the apparatus; an illuminating part for illuminating at least either of said display part and said manual input part by an illumination light; and an illumination control part for executing luminous intensity control of said illumination light based on said ambient illuminance level detected by said illuminance detecting part, wherein said illumination control part performs said luminous intensity control by the following processes:

a luminous intensity determination process for generating an illuminance decision value based on said ambient illuminance level, and compares said illuminance decision value and a predetermined threshold to determine the luminous intensity of said illumination light; and a luminous intensity adjusting process for adjusting the luminous intensity of said illumination light, based on the luminous intensity determined in said luminous intensity determination process,

said luminous intensity determination process providing thresholds of different values in performing said luminous intensity control for said display part, and in performing said luminous intensity control for said manual input part, respectively.

10. A portable information terminal apparatus comprising a display part; a manual input part; a transmitting and receiving part for executing communication signal transmission and reception; an illuminance detecting part for detecting an ambient illuminance level around the apparatus; an illuminating part for illuminating at least either of said display part and said manual input part by an illumination light; and an illumination control part for lighting up said illuminating part for a predetermined adjust period based on an ambient illuminance level detected by said illuminance detecting part; wherein

said illumination control part adjusts the length of said predetermined adjust period in accordance with at least one of said ambient illuminance level detected by said illuminance detecting part, the contents of display information to be displayed on said display part, a function commanded from said manual input part, and a type of signal to be handled by said transmitting and receiving part.

11. The portable information terminal apparatus according to claim 10, wherein said illumination control part sets the length of said predetermined adjust period to different values in performing said luminous intensity control for said display part, and in performing said luminous intensity control for said manual input part, respectively.

FIG.1

RELATIONSHIP BETWEEN THE OCCURRENCE OF EVENTS AND THE ILLUMINANCE MEASUREMENT PROCESS ETC.

OCCURRENCE OF EVENT

ACTIVATION OF SUBROUTINES SUCH AS ILLUMINANCE MEASUREME ILLUMINANCE DECISION, AND ILLUMINATION CONTROL

TIME

TIME PERIOD T

TIME INTERVALS t DURING WHICH ILLUMINANCE MEASUREMENT PROCESS ETC. ARE REPEATED

TIMING AT WHICH ILLUMINANCE MEASUREMENT PROCESS ETC. ARE PERFORMED

TIME

BACKLIGHT CONTROL PROCESSING (ON/OFF)

ON

OFF

TIME

# FIG.2A

RELATIONSHIP BETWEEN THE OCCURRENCE OF EVENTS AND THE TIME PERIOD T

OCCURRENCE OF EVENT    OCCURRENCE OF EVENT    OCCURRENCE OF EVENT

TIME

TIME PERIOD T

TIME PERIOD T

TIME PERIOD T

OCCURRENCE OF EVENTS (E.G., RECEIVING A CALL AND KEY OPERATION) MAY EXTEND THE TIME PERIOD T IN A RETRIGGERABLE FASHION

# FIG.2B

TIME INTERVALS t DURING WHICH ILLUMINANCE
MEASUREMENT PROCESS ETC. ARE REPEATED

TIMING AT WHICH
ILLUMINANCE
MEASUREMENT
PROCESS ETC.
ARE PERFORMED

t1　t2　t3　t4　t5　TIME

ILLUMINANCE
MEASUREMENT
an

a1 (A1)

a4　a5
(A4)　(A5)

THRESHOLD　Ath

a3
(A3)

a2
(A2)

t1　t2　t3　t4　t5　TIME

BACKLIGHT
CONTROL
PROCESSING
(ON/OFF)

ON —

OFF

ILLUMINANCE DECISION
VALUE An

RELATIONSHIP BETWEEN ILLUMINANCE
DECISION VALUE AND THRESHOLD

BACKLIGHT
ILLUMINATION
CONTROL

| ILLUMINANCE DECISION VALUE An | RELATIONSHIP BETWEEN ILLUMINANCE DECISION VALUE AND THRESHOLD | BACKLIGHT ILLUMINATION CONTROL |
|---|---|---|
| $A1 = a1$ | $A1 > Ath$ | OFF |
| $A2 = a2$ | $A2 < Ath$ | ON |
| $A3 = a3$ | $A3 < Ath$ | ON |
| $A4 = a4$ | $A4 > Ath$ | OFF |
| $A5 = a5$ | $A5 > Ath$ | OFF |

# FIG. 3

FIG.4

TIME INTERVALS t DURING WHICH ILLUMINANCE
MEASUREMENT PROCESS ETC. ARE REPEATED

TIMING AT WHICH
ILLUMINANCE
MEASUREMENT
PROCESS ETC.
ARE PERFORMED

ILLUMINANCE
MEASUREMENT
an

ILLUMINANCE
DECISION
VALUE An

THRESHOLD Ath

BACKLIGHT ILLUMINATION
CONTROL PROCESSING
IN MODE 1

ILLUMINATION CONTROL
PROCESSING WITHOUT
CORRECTIVE COMPUTATION

# FIG.5

FIG.6

HYSTERESIS PROPERTIES WITH RESPECT TO THRESHOLD WHEN INCREASING ILLUMINANCE

ILLUMINANCE DECISION VALUE An

Ath

Ath − Δ

An

An+1

An+2

An−1

TIME

tn−1    tn    tn+1    tn+2

BACKLIGHT ILLUMINATION CONTROL PROCESSING

ON

OFF

# F I G . 7 A

HYSTERESIS PROPERTIES WITH RESPECT TO THRESHOLD WHEN DECREASING ILLUMINANCE

ILLUMINANCE DECISION VALUE An

An−1

Ath + Δ

An+1

Ath

An

An+2

TIME

tn−1    tn    tn+1    tn+2

BACKLIGHT ILLUMINATION CONTROL PROCESSING

ON

OFF

# F I G . 7 B

HYSTERESIS PROPERTIES WITH RESPECT TO ILLUMINANCE DECISION
VALUE WHEN INCREASING ILLUMINANCE

ILLUMINANCE
DECISION
VALUE An

$(An+2) \times \alpha$

$(An+1) \times \alpha$

An

Ath

An+2

$(\alpha > 1)$

An+1

An-1

$tn-1$    $tn$    $tn+1$    $tn+2$    TIME

BACKLIGHT
ILLUMINATION
CONTROL
PROCESSING

ON

OFF

# F I G . 8 A

HYSTERESIS PROPERTIES WITH RESPECT TO ILLUMINANCE DECISION
VALUE WHEN DECREASING ILLUMINANCE

ILLUMINANCE
DECISION
VALUE An

An-1

An+1

$(\beta < 1)$

Ath

An+2

An

$(An+1) \times \beta$

$(An+2) \times \beta$

$tn-1$    $tn$    $tn+1$    $tn+2$    TIME

BACKLIGHT
ILLUMINATION
CONTROL
PROCESSING

ON

OFF

# F I G . 8 B